# EUROPÄISCHE PATENTSCHRIFT

(11) **EP 3 810 467 B1**
(45) Veröffentlichungstag und Bekanntmachung des Hinweises auf die Patenterteilung: **04.05.2022**
(21) Anmeldenummer: 19736994.5
(22) Anmeldetag: 18.06.2019
(51) Int. Cl.: B60T 13/68

(54) **PARKBREMSEINRICHTUNG FÜR EIN KRAFTFAHRZEUG**
PARKING BRAKE ARRANGEMENT FOR VEHICLE
DISPOSITIF DE FREIN DE STATIONNEMENT POUR VÉHICULE

(30) Priorität: 19.06.2018 DE 102018114642
(43) Veröffentlichungstag der Anmeldung: 28.04.2021
(73) Patentinhaber: KNORR-BREMSE Systeme für Nutzfahrzeuge GmbH, 80809 München (DE)
(72) Erfinder: SCHNITTGER, Karsten, 80935 München (DE); GRIESSER, Fabian, 80803 München (DE)
(86) Internationale Anmeldenummer: PCT/EP2019/065935
(87) Internationale Veröffentlichungsnummer: WO 2019/243283

(56) Entgegenhaltungen:
- EP-A1- 2 199 162
- EP-A2- 1 847 432
- WO-A1-2015/154787
- WO-A1-2016/169970
- WO-A1-2016/169973
- WO-A1-2016/169975
- WO-A2-2009/098003
- DE-A1-102013 005 896
- DE-A1-102015 118 290
- BOSCH: "Kraftfahrtechnisches Taschenbuch", 1995 page 648,

## Beschreibung

Die vorliegende Erfindung betrifft eine Parkbremseinrichtung für Kraftfahrzeuge, insbesondere eine Parkbremseinrichtung mit wenigstens einem Druckluftanschluss, einer Einlass-Entlüftungs-Magnetventileinheit und einem Relaisventil.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22, Auflage, Düsseldorf, 1995, S. 648).

Aus der WO 2015/154 787 A1 ist bereits eine elektronische Parkbremse bekannt, die ein Relaisventil nutzt, dessen Kolben als Stufenkolben ausgeführt ist und eine Rückkopplung des Relaisventilausgangs zum Steuerraum des Relaisventils aulweist. In den Rückkopplungspfad ist eine Drosseleinheit vorgesehen. Jedoch tritt insbesondere beim Entlüften der Vorrichtung anhand der Rückkopplung mit der Drosseleinheit ein Druckluftverlust auf. Es wird eine Nachregelung notwendig, wobei Magnetventile zur Belüftung und Entlüftung entsprechend geschaltet werden müssen.

Aus der WO 2016/169970 A1 ist eine Parkbremseinrichtung für Kraftfahrzeuge mit wenigstens einer Steuerventileinrichtung, mit wenigstens einem Relaisventil, mit wenigstens einer pneumatischen Bremsvorrichtung und mit wenigstens einem Anhängersteuermodul bekannt. Die Steuerventileinrichtung und das Relaisventil sind mittels einer Verbindungsleitung miteinander verbunden. Mittels der Steuerventileinrichtung ist das Relaisventil steuerbar. Mittels des Relaisventils ist wenigstens die pneumatische Bremsvorrichtung ansteuerbar, wobei wenigstens eine Zuleitung zum Anhängersteuermodul stromabwärts des Relaisventils abzweigt. Stromaufwärts des Anhängersteuermoduls ist ein erstes Select-High-Ventil vorgesehen, wobei ein erster Eingang des ersten Select-High-Ventils mit der Zuleitung zum Anhängersteuermodul verbunden ist und wobei ein zweiter Eingang des ersten Select-High-Ventils mit einer Zuleitung verbunden ist, in der ein Abluftventil angeordnet ist, mittels dessen die über die Zuleitung zugeführte Druckluft einstellbar ist.

Es ist daher die Aufgabe der vorliegenden Erfindung, eine Parkbremseinrichtung der eingangs genannten Art in vorteilhafter Weise weiter zu bilden, insbesondere dahingehend, dass eine Parkbremseinrichtung vergleichsweise einfach aufgebaut sein kann und auf vergleichsweise kontrollierte Weise belüftet und entlüftet werden kann. Diese Aufgabe wird erfindungsgemäß gelöst durch eine Parkbremseinrichtung mit den Merkmalen des Anspruchs 1. Danach ist eine Parkbremseinrichtung für Kraftfahrzeuge mit wenigstens einem Druckluftanschluss vorgesehen, einer Einlass-Entlüftungs-Magnetventileinheit, einem Relaisventil und wenigstens einem ersten Druckluftausgang, wobei der Druckluftanschluss mit der Einlass-Entlüftungs-Magnetventileinheit und dem Relaisventil verbunden ist, wobei eine Steuerleitung derart vorgesehen ist, so dass das Relaisventils mit der Einlass-Entlüftungs-Magnetventileinheit verbunden oder verbindbar ist, wobei die Steuerleitung stromaufwärts des Relaisventils eine erste Abzweigung und eine zweite Abzweigung aufweist, wobei eine Ausgangsleitung vorgesehen ist, die mit dem wenigstens einen ersten Druckluftausgang verbunden ist und eine Ausgangs-Abzweigung aufweist, wobei eine Federbremsleitung vorgesehen ist, die über die erste Abzweigung mit der Steuerleitung und über die Ausgangs-Abzweigung mit der Ausgangsleitung verbunden ist, und eine Anhänger-Ventilleitung vorgesehen ist, die über die zweite Abzweigung mit der Steuerleitung verbunden ist, wobei die Parkbremseinrichtung ein Federbremsventil aufweist, das in der Federbremsleitung angeordnet ist und mit dem Relaisventil verbunden ist, und eine Drosseleinheit, die in der Federbremsleitung zwischen der Ausgangs-Abzweigung der Ausgangsleitung und der ersten Abzweigung der Steuerleitung angeordnet ist.

Die Erfindung basiert auf dem Grundgedanken, dass in der Federbremsleitung sowohl ein Federbremsventil als auch eine Drosseleinheit vorgesehen ist.

Das Federbremsventil und die Drosseleinheit sind insbesondere über die Federbremsleitung, die erste Abzweigung und die Steuerleitung mit dem Relaisventil verbunden.

Des Weiteren ist die Federbremsleitung mit dem Federbremsventil über die Steuerleitung mit der Einlass-Entlüftungs-Magnetventileinheit verbunden. Auf diese Weise ist es möglich, eine Entlüftung oder Belüftung wenigstens eines Federspeicherbremszylinders anhand des Federbremsventils und der Drosseleinheit bedarfsgerecht und mit hoher Genauigkeit zu steuern oder gegebenenfalls zu sperren.

Es ist im Sinne der vorliegenden Erfindung bevorzugter Weise vorgesehen, dass das Relaisventils als ein bistabiles Element ausgebildet ist.

Das Relaisventil weist vorzugsweise einen Eingang, einen Ausgang bzw. Arbeitsausgang, einen Steuereingang und einen Entlüftungsausgang auf. Die Steuerleitung ist über den Steuereingang mit dem Relaisventil verbunden. Die Druckluftquelle ist mit dem Eingang des Relaisventils verbunden. Der Ausgang bzw. Arbeitsausgang des Relaisventils ist über die Ausgangsleitung bevorzugter Weise mit wenigstens einem Federspeicherbremszylinder verbunden oder verbindbar.

Indem an dem Steuereingang ein spezifischer Druck angelegt wird, ist eine Verbindung zwischen dem Eingang und dem Ausgang bzw. Arbeitsausgang des Relaisventils herstellbar und steuerbar.

Dieser spezifische Druck muss einem Schwelldruck gleich oder größer sein, um eine Verbindung zwischen Eingang und Ausgang bereitstellen zu können. Bei Erreichen des Schwelldrucks wird der Entlüftungsausgang des Relaisventils geschlossen.

Anhand von Fluiddrücken, die wenigstens gleich oder größer als der vorbestimmbare Schwelldruck sind, ist eine Verbindung zwischen dem Eingang und dem Ausgang des Relaisventils bedarfsweise steuerbar. Auf diese Weise ist vorteilhaft ein spezifischer Druck am Ausgang bzw. Arbeitsausgang des Relaisventils erzielbar.

Darüber hinaus kann vorgesehen sein, dass die Federbremsleitung über die Drosseleinheit und das Federbremsventil eine Rückkopplungsverbindung zu dem Relaisventil ausbildet. Insbesondere bildet die Federbremsleitung über das Federbremsventil und die Drosseleinheit eine Rückkopplung zwischen dem Ausgang des Relaisventils und dem Steuereingang des Relaisventils aus.

Die Federbremsleitung ist vorzugsweise über die Steuerleitung mit dem Steuereingang des Relaisventils verbunden. Des Weiteren ist die Federbremsleitung über die Ausgangsleitung mit dem Ausgang bzw. Arbeitsausgang des Relaisventils verbunden.

Insbesondere kann die Drosseleinheit entlang der Federbremsleitung zwischen der ersten Abzweigung und dem Federbremsventil angeordnet sein.

Alternativ kann die Drosseleinheit entlang der Federbremsleitung zwischen dem Federbremsventil und der Ausgangs-Abzweigung angeordnet sein.

In diesem Sinne ist die Drosseleinheit, in Abhängigkeit von dem konkreten Zustand bzw. Schaltzustand der Parkbremseinrichtung, stromaufwärts oder stromabwärts des Federbremsventils entlang der Federbremsleitung vorgesehen.

Alternativ kann die Parkbremseinrichtung auch ohne ein Federbremsventil in der Federbremsleitung vorgesehen sein. In der rückkoppelnden Federbremsleitung ist in diesem Falle allein die Drosseleinheit angeordnet. Insbesondere kann das Federbremsventil optional eingespart werden, sodass auch kostengünstigere Parkbremseinrichtungen mit geringerer Regel- bzw. Stellgenauigkeit bedarfsweise verfügbar sind.

In diesem Sinne ist mittels der Kombination aus Federbremsventil und Drosseleinheit in der Federbremsleitung insbesondere ein Luftverlust im Zuge eines Schaltvorgangs zwischen verschiedenen Betriebsmodi eines Kraftfahrzeuges mit der erfindungsgemäßen Parkbremseinrichtung vermeidbar. Ein Schaltvorgang zwischen den Betriebszuständen kann schneller, effizienter und präziser Erfolgen. Insbesondere ist durch das Unterbinden eines Luftverlustes keine Nachregelung von Druckluft notwendig.

Als Betriebsmodi können ein Fahrzustand, ein Parkzustand oder ein abstufbarer Bremszustand der Parkbremseinrichtung für das Kraftfahrzeug vorgesehen sein.

Für den abstufbaren Bremszustand kann ein bedarfsweiser, konstanter Druck an dem Ausgang des Relaisventils einstellbar sein, um eine beliebige Bremswirkung zu erzielen.

Unter einem konstanten Druck kann im Sinne der vorliegenden Erfindung insbesondere auch ein Druckbereich mit einem einzuhaltenden, vorzugsweise vorgebbaren, Maximaldruck und Minimaldruck verstanden werden.

Insbesondere kann der Druck zwischen 0 bar und dem maximalen Systemdruck liegen.

Ein konstanter Druck bzw. Druckbereich kann im Sinne der vorliegenden Erfindung insbesondere zeitweise eingestellt bzw. gehalten werden.

Am Ausgang des Relaisventils ist ein Druck bereitstellbar, der vorzugsweise proportional zu dem Druck am Steuereingang des Relaisventils ist.

Des Weiteren kann ein Trailer-Test-Zustand vorgesehen sein, bei dem eine Bremswirkung des Anhängers zumindest kurzzeitig gelöst wird, um eine hinreichende Bremswirkung des Zugfahrzeugs insbesondere an einem Gefälle überprüfen zu können.

Alternativ kann darüber hinaus ein Stretch-Break-Zustand anhand der erfindungsgemäßen Parkbremseinrichtung vorgesehen sein. So kann durch ein vorzugsweise abstufbares Einbremsen des Anhängers das Kraftfahrzeug, mit z.B. einem Zugfahrzeug und einem Anhänger, gestreckt werden und ist auf diese Weise stabilisierbar.

Vorzugsweise ist in diesem Sinne eine Parkbremse und eine Betriebsbremse des Zugfahrzeugs im Stretch-Brake-Zustand gelöst, wobei eine Betriebsbremse des Anhängers aktiviert ist, insbesondere abstufbar aktivierbar ist.

In diesem Sinne ist unter einem Kraftfahrzeug, insbesondere einem Nutzfahrzeug, vorzugsweise ein Zugfahrzeug mit wenigstens einem Anhänger zu verstehen.

Die Umschaltung zwischen z.B. einem Fahrzustand, einem Parkzustand oder einem abstufbaren Bremszustand ist insbesondere anhand der erfindungsgemäßen Parkbremsvorrichtung schneller und kontrollierter durchführbar.

Es ist weiter möglich, dass das Federbremsventil als ein stromlos offenes Magnetventil vorgesehen ist, so dass im stromlosen Zustand des Federbremsventils zwischen einem Steuereingang und einem Ausgang des Relaisventils eine Rückkopplung über die Steuerleitung, die Federbremsleitung und die Ausgangsleitung mit dem Federbremsventil und der Drosseleinheit vorliegt.

Im stromlosen Zustand ist eine vorteilhafte Rückkopplung zwischen Ausgang und Steuereingang des Relaisventils gegeben, die im Bedarfsfall durch Umschalten des Federbremsventils trennbar ist. So kann ein Druck von dem Ausgang bzw. Arbeitsausgang des Relaisventils bedarfsweise zur Steuerung des Relaisventils einsetzbar sein.

Des Weiteren kann das Federbremsventil während eines Betriebszustandes vorteilhaft in der stromlos offenen Schaltstellung verbleiben und muss lediglich zum Wechseln des Betriebszustands geschaltet werden.

Insbesondere kann eine Verbindung zwischen dem Eingang und dem Ausgang des Relaisventils erhalten werden, indem der Druck an dem Ausgang des Relaisventils zu dem Steuereingang des Relaisventils zurückkoppelbar ist.

Ein Luftverlust bei der Be- und Entlüftung ist an dem Ausgang des Relaisventils anhand des Federbremsventils entlang der Federbremsleitung vermeidbar. Ein Umschalten zwischen den Betriebszuständen erfolgt schneller, effizienter und präziser.

Im Sinne der vorliegenden Erfindung sind Ventile bevorzugter Weise als Magnetventile mit einer Rückstellfeder vorgesehen. Anhand elektromagnetisch schaltbarer, federbelasteter Ventile kann ein stromloser Schaltzustand stets sichergestellt werden, insbesondere sobald ein in gezielter Form, z.B. durch elektromagnetisches Schalten, herbeigeführter Schaltzustand beendet wird.

Des Weiteren ist es möglich, einen konstanten Druck an dem Ausgang des Relaisventils bzw. der Parkbremseinrichtung durch Schalten des Federbremsventils zu steuern bzw. zu regeln.

Das bedeutet, dass die Einlass-Entlüftungs-Magnetventileinheit zur Einstellung eines konstanten Druckes an dem Ausgang des Relaisventils nicht geschaltet werden muss. Die Regelung bzw. Einstellung eines konstanten Drucks kann anhand der Federbremsleitung mit der Drosseleinheit und dem Federbremsventil sowohl einfacher als auch präziser erfolgen.

Weiter kann vorgesehen sein, dass zwischen der ersten Abzweigung und der zweiten Abzweigung der Steuerleitung ein Steuerventil angeordnet ist. So kann der Druck an dem Steuereingang des Relaisventils eingesperrt werden, während der Druck an der zweiten Abzweigung der Steuerleitung unabhängig davon regelbar ist.

Anhand des Steuerventils stehen verschiedene und unabhängig voneinander regelbare Anschlüsse an der Steuerleitung in Form der ersten Abzweigung, mit der Federbremsleitung, und der zweiten Abzweigung, mit der Anhänger-Ventilleitung, zur Verfügung.

Darüber hinaus ist es möglich, dass ein Einlassventil der Einlass-Entlüftungs-Magnetventileinheit als ein stromlos offenes Magnetventil und das Steuerventil als ein stromlos geschlossenes Magnetventil vorgesehen ist. Vorteilhafter Weise hat der Steuereingang des Relaisventils durch das stromlos geschlossene Steuerventil ein konstantes Volumen, selbst wenn die Leitungslängen zu der Anhänger-Ventileinheit bei verschiedenen Fahrzeugausführungen variieren.

Bevorzugter Weise ist ein Entlüftungsventil der Einlass-Entlüftungs-Magnetventileinheit im Allgemeinen als ein stromlos geschlossenes Magnetventil vorgesehen. Insbesondere kann das Entlüftungsventil ein 2/2-Wegeventil sein.

Das Federbremsventil ist vorzugsweise als ein stromlos offenes Magnetventil in der erfindungsgemäßen Parkbremseinrichtung vorgesehen. Bevorzugter Weise ist das Federbremsventil ein 2/2-Wegeventil.

Des Weiteren ist möglich, dass das Einlassventil der Einlass-Entlüftungs-Magnetventileinheit als ein stromlos geschlossenes Magnetventil und das Steuerventil als ein stromlos offenes Magnetventil vorgesehen ist. Vorteilhafter Weise hat der Steuereingang anhand des stromlos geschlossenen Einlassventils auch in diesem Falle ein konstantes Volumen, selbst wenn die Leitungslängen zur Anhänger-Ventileinheit bei verschiedenen Fahrzeugausführungen variieren.

Darüber hinaus kann in diesem Falle ein Trailer-Test-Zustand vorgesehen sein, wobei aus dem Parkzustand des Kraftfahrzeuges heraus ein Steuermodul des Anhängers über die Anhänger-Ventilleitung und einen damit verbundenen Anhänger-Steuerausgang der Parkbremseinrichtung mit Druckluft beaufschlagt wird.

Die Betriebsbremse des Anhängers wird durch die Beaufschlagung mit Druckluft gelöst und bringt keine Bremswirkung auf. In diesem Sinne arbeitet die Betriebsbremse des Anhängers im Vergleich zu einer Betriebsbremse des Zugfahrzeuges in invertierter Form.

Sofern das Kraftfahrzeug an einem Gefälle geparkt ist, beginnt das Kraftfahrzeug zu rollen sobald die Druckluftbeaufschlagung erfolgt und die Parkbremse des Zugfahrzeuges keine hinreichende Bremskraft zum Parken des Kraftfahrzeuges an dem Gefälle aufbringen kann. Somit kann ein Wegrollen des Kraftfahrzeuges in Richtung des Gefälles bei Ausfall der Betriebsbremse des Anhängers vorteilhafter Weise im Vorhinein erkannt werden.

Weiter kann vorgesehen sein, dass die Parkbremseinrichtung eine Anhänger-Ventileinheit aufweist, die über die Anhänger-Ventilleitung, die zweite Abzweigung und die Steuerleitung mit der Einlass-Entlüftungs-Magnetventileinheit verbunden ist.

Somit kann z.B. ein Steuermodul zur Betätigung der Betriebsbremse eines Anhängers anhand einer erfindungsgemäßen Parkbremseinrichtung auf kontrollierte Weise gesteuert werden, insbesondere unabhängig von wenigstens einem Federspeicherbremszylinder als Parkbremse des Zugfahrzeugs und einer Betriebsbremse des Zugfahrzeugs.

Darüber hinaus ist es möglich, dass die Anhänger-Ventileinheit ein Anhänger-Steuerventil ist, das mit der Federbremsleitung und über die Federbremsleitung mit dem Federbremsventil und dem Relaisventil verbunden ist.

Auf diese Weise kann z.B. ein Steuermodul zur Betätigung einer Betriebsbremse eines Anhängers vorteilhaft durch die erfindungsgemäße Parkbremseinrichtung gesteuert werden. Insbesondere kann ein Steuermodul des Anhängers sowohl über die Anhänger-Ventilleitung mit der Einlass-Entlüftungs-Magnetventileinheit als auch über die Federbremsleitung mit dem Ausgang des Relaisventils angesteuert werden.

Es ist eine kombinierte oder unabhängige Steuerung der Bremsvorrichtungen des Anhängers und des Zugfahrzeugs möglich.

Des Weiteren ist es möglich, dass die Anhänger-Ventileinheit als ein in die Parkbremseinrichtung integriertes Anhänger-Steuermodul ausgebildet ist. Durch die Integration des Anhänger-Steuermoduls in die Parkbremseinrichtung ist das Volumen der Steuerleitung zur Anhänger-Ventileinheit stets gleich. Es wird auf vorteilhafte Weise eine präzise Regelung ermöglicht.

Darüber hinaus erlaubt dies die Ausnutzung von Synergien zwischen der Parkbremseinrichtung und der Anhänger-Ventileinheit. Durch die gemeinsame Nutzung von Magnetventilen können vergleichsweise insgesamt zwei Magnetventile eingespart werden.

Es kann des Weiteren vorgesehen sein, dass die Einlass-Entlüftungs-Magnetventileinheit derart ausgestaltet ist, dass zwischen dem Druckluftanschluss und der Steuerleitung wenigstens ein Einlassventil und zwischen der Steuerleitung und einem Entlüftungsausgang ein Entlüftungsventil vorgesehen ist. In diesem Sinne kann das Entlüftungs-Magnetventil den Entlüftungsausgang aufweisen.

Die Steuerleitung mündet stromaufwärts des Relaisventils in das vorzugsweise eigenständige Einlassventil sowie das eigenständige Entlüftungsventil innerhalb der Einlass-Entlüftungs-Magnetventileinheit.

Alternativ kann vorgesehen sein, dass die Einlass-Entlüftungs-Magnetventileinheit ein kombiniertes Magnetventil als Einlass-Entlüftungs-Ventil mit dem Entlüftungsausgang aufweist. In diesem Fall ist in der Einlass-Entlüftungs-Magnetventileinheit. zwischen dem kombinierten Einlass-Entlüftungs-Ventil und der zweiten Abzweigung der Steuerleitung, vorzugsweise ein Halteventil vorgesehen.

So kann eine gezielte Steuerbarkeit der Volumina innerhalb der Parkbremseinrichtung, insbesondere zur Belüftung und Entlüftung des Steuereingangs des Relaisventils, erzielt werden.

Weitere Einzelheiten und Vorteile der Erfindung sollen nun anhand eines in den Zeichnungen näher dargestellten Ausführungsbeispiels erläutert werden.

Es zeigen:
- Fig. 1a-f: ein erstes Ausführungsbeispiel einer Parkbremseinrichtung mit einem Anhänger-Steuerventil in verschiedenen Schaltzuständen;
- Fig. 2a-f: ein zweites Ausführungsbeispiel einer Parkbremseinrichtung mit einem Anhänger-Steuerventil in verschiedenen Schaltzuständen;
- Fig. 3: ein erstes Ausführungsbeispiel einer Parkbremseinrichtung mit einem integrierten Anhänger-Steuermodul;
- Fig.4: ein zweites Ausführungsbeispiel einer Parkbremseinrichtung mit einem integrierten Anhänger-Steuermodul.

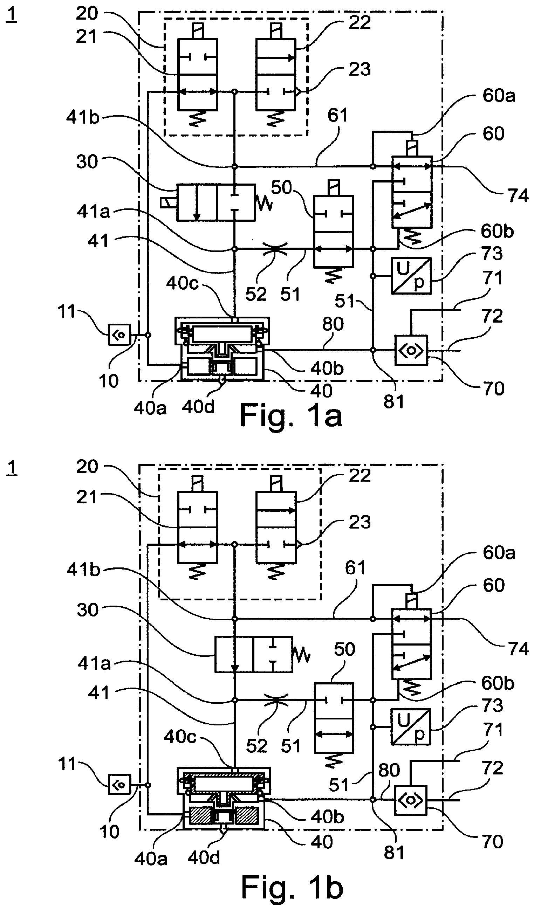

Die **Figuren 1a bis 1f** zeigen in schematischer Darstellung eine Parkbremseinrichtung 1 für Kraftfahrzeuge, hier eines Nutzfahrzeuges, gemäß einem ersten Ausführungsbeispiel, insbesondere verschiedene Schaltzustände bzw. Betriebszustände dieses ersten Ausführungsbeispiels.

Gemäß Fig. 1a weist die Parkbremseinrichtung einen Druckluftanschluss 10, eine Einlass-Entlüftungs-Magnetventileinheit 20 und ein Relaisventil 40 auf.

Das Relaisventil 40 ist mit einem Eingang 40a, mit einem Ausgang bzw. Arbeitsausgang 40b, einem Steuereingang 40c und einem Entlüftungsausgang 40d vorgesehen. Der Druckluftanschluss 10 ist mit dem Eingang 40a des Relaisventils 40 verbunden.

Das Relaisventil 40 stellt ein bistabiles Element dar.

In Abhängigkeit von dem Druck an dem Steuereingang 40c sind an dem Ausgang 40b des Relaisventils 40 verschiedene Betriebszustände der Parkbremseinrichtung 1 in Form von Luftdrücken abbildbar, insbesondere ein Parkzustand, ein Fahrzustand und ein abgestufter Bremszustand.

Insbesondere ist in Fig. 1a das erste Ausführungsbeispiel im Parkzustand dargestellt.

Des Weiteren kann im Sinne des ersten Ausführungsbeispiels gemäß Fig. 1a auch ein Stretch-Brake-Zustand vorgesehen sein.

Die Einlass-Entlüftungs-Magnetventileinheit 20 ist mit einem Einlassventil 21 und einem Entlüftungsventil 22 vorgesehen. Nach Fig. 1a weist das Entlüftungsventil 22 einen Entlüftungsausgang 23 auf.

Das Einlassventil 21 und das Entlüftungsventil 22 sind als 2/2-Wegeventile vorgesehen.

Das Einlassventil 21 ist stromlos geschlossen ausgestaltet. Das Entlüftungsventil 22 ist stromlos geschlossen ausgestaltet.

Der Druckluftanschluss 10 ist mit der Einlass-Eingangs-Magnetventileinheit 20, insbesondere mit dem Einlassventil 21 verbunden.

Der Druckluftanschluss 10 ist hier repräsentiert durch eine nicht näher dargestellte Druckluftquelle sowie einem gezeigten Rückschlagventil 11.

Des Weiteren ist die Parkbremseinrichtung 1 mit einer Steuerleitung 41 vorgesehen.

Die Steuerleitung 41 ist mit der Einlass-Entlüftungs-Magnetventileinheit 20 derart verbunden, so dass das Einlassventil 21 und das Entlüftungsventil 22 unabhängig voneinander mit der Steuerleitung verbunden sind.

Die Steuerleitung 41 ist mit dem Steuereingang 40c des Relaisventils 40 verbunden. Somit ist eine Verbindung zwischen der Einlass-Entlüftungs-Magnetventileinheit 20 und dem Steuereingang 40c des Relaisventils 40 verfügbar.

Die Steuerleitung 41 weist stromaufwärts des Relaisventils 40 eine erste Abzweigung 41a und eine zweite Abzweigung 41b auf.

Zwischen der ersten Abzweigung 41a und zweiten Abzweigung 41b ist in der Steuerleitung 41 ein Steuerventil 30 vorgesehen.

Das Steuerventil 30 ist als ein 2/2-Wegeventil ausgestaltet. Im stromlosen Zustand ist das Steuerventil 30 nach Fig. 1a stromlos offen geschaltet.

Des Weiteren weist die Parkbremseinrichtung 1 eine Federbremsleitung 51 auf. Die Federbremsleitung 51 ist über die erste Abzweigung 41a mit der Steuerleitung 41 verbunden.

Es liegt somit eine Verbindung zwischen der Federbremsleitung 51 und dem Steuereingang 40c des Relaisventils 40 vor.

Des Weiteren ist die Federbremsleitung 51 über eine Ausgangs-Abzweigung 81 an eine Ausgangsleitung 80 angeschlossen.

Die Ausgangsleitung 80 ist mit dem Ausgang 40b des Relaisventils 40 verbunden, ebenso wie mit wenigstens einem Druckluftausgang 71 und 72 der Parkbremseinheit 1.

So ist die Federbremsleitung 51 über die Ausgangs-Abzweigung 81 mit dem Ausgang bzw. Arbeitsausgang 40b des Relaisventils 40 verbunden. In diesem Sinne bildet die Federbremsleitung 51 eine Rückkopplungsverbindung zwischen dem Ausgang 40b und dem Steuereingang 40c des Relaisventils 40 aus.

Von dem Ausgang 40b des Relaisventils 40 kann Druckluft nach Fig. 1a entlang der Ausgangsleitung 80 über ein Wechsel-Rückschlagventil 70 an einen Federspeicherbremszylinderausgang 71 der Parkbremseinrichtung 1 für das Zugfahrzeug eines Kraftfahrzeuges weitergeleitet werden.

Das Wechsel-Rückschlagventil 70 ist über die Ausgangsleitung 80 mit der Federbremsleitung 51, dem Federspeicherbremszylinderausgang 71 und einem Betriebsbremsenausgang 72 der Parkbremseinrichtung für ein Zugfahrzeug verbunden.

Der Federspeicherbremszylinderausgang 71 und der Betriebsbremsenausgang 72 stellen in diesem Sinne Druckluftausgänge der Parkbremseinheit 1 dar.

Das Wechsel-Rückschlagventil 70 folgt in seinem Schaltverhalten dem vorliegenden Druckgefälle.

Vorzugsweise ist das Wechsel-Rückschlagventil 70 als ein sogenanntes Select-High-Ventil vorgesehen.

So kann der Federspeicherbremszylinderausgang 71 mit einem hohen Druck des Ausgangs 40b des Relaisventils 40 belüftet werden, wobei die Verbindung zum Betriebsbremsenausgang 72, an dem ein niedrigerer Druck anliegt, gesperrt ist.

Darüber hinaus ist bei Betätigung der Betriebsbremse und einem damit verbundenen Druckaufbau an dem Betriebsbremsenausgang 72 ein Übergang von Druckluft von dem Betriebsbremsenausgang 72 zu dem Federspeicherbremszylinderausgang 71 über das Wechsel-Rückschlagventil 70 möglich.

Sofern an dem Betriebsbremsenausgang 72 ein höherer Druck anliegt als an dem Ausgang 40b des Relaisventils 40, eröffnet das Wechsel-Rückschlagventil 70 gemäß dem Druckgefälle eine Verbindung zwischen dem Betriebsbremsenausgang 72 und dem Federspeicherbremszylinderausgang 71.

Es ist eine kombinierte Bremswirkung bei Betätigung der Betriebsbremse des Zugfahrzeugs an dem Betriebsbremsenausgang 72 in Kombination mit wenigstens einem Federspeicherbremszylinder des Zugfahrzeugs an dem Federspeicherbremszylinderausgang 71 anhand des Wechsel-Rückschlagventils 70 erzielbar.

Des Weiteren ist in der Federbremsleitung 51 ein Federbremsventil 50 angeordnet. Somit ist das Federbremsventil 50 mit dem Steuereingang 40c und dem Ausgang 40b des Relaisventils 40 verbunden.

Das Federbremsventil 50 ist im stromlosen Zustand offen geschaltet.

Nach Fig. 1a ist das Federbremsventil 50 als ein 2/2-Wegeventil vorgesehen.

Zwischen der Ausgangs-Abzweigung 81 der Ausgangsleitung 80 und der ersten Abzweigung 41a der Steuerleitung 41, insbesondere zwischen dem Federbremsventil 50 und der ersten Abzweigung 41a der Steuerleitung 41, ist eine Drosseleinheit 52 in der Federbremsleitung 51 angeordnet.

Allgemein ist im Sinne der vorliegenden Erfindung bevorzugter Weise stets vorgesehen, dass die Drosseleinheit 52 und das Federbremsventil 50 entlang der Federbremsleitung 51 zwischen der ersten Abzweigung 41a der Steuerleitung 41 und der Ausgangs-Abzweigung 81 der Ausgangsleitung 80 angeordnet sind.

Eine Verbindung des Relaisventils 40, insbesondere des Ausgangs 40b, und des Wechsel-Rückschlagventils 70, insbesondere des Betriebsbremsausgangs 72 und/oder des Federspeicherbremszylinderausgangs 71 als Druckluftausgänge, zu der Steuerleitung 41 entlang der Ausgangsleitung 80 und der Federbremsleitung 51 ist mittels dem Federbremsventil 50 und der Drosseleinheit 52 steuer- bzw. kontrollierbar.

Anhand der rückkoppelnden Federbremsleitung 51 mit der Drosseleinheit 52 und dem Federbremsventil 50 kann der Fluiddruck bzw. Luftdruck an dem Ausgang 40b des Relaisventils 40 gezielt eingestellt und gesteuert bzw. geregelt werden.

Zwischen dem Federbremsventil 50 und dem Ausgang 40b des Relaisventils 40 ist darüber hinaus ein Druckluftsensor 73 angeordnet. Somit ist der Luftdruck bzw. Fluiddruck an dem Ausgang 40b des Relaisventils 40 gezielt steuerbar und/oder regelbar.

Die Parkbremseinrichtung weist darüber hinaus eine Anhänger-Ventilleitung 61 auf. Die Anhänger-Ventilleitung 61 ist über die zweite Abzweigung 41b mit der Steuerleitung 41 verbunden.

Des Weiteren ist nach Fig. 1a ein Anhänger-Steuerventil 60 in der Anhänger-Ventilleitung 61 angeordnet.

Das Anhänger-Steuerventil 60 ist als ein 3/2-Wegeventil ausgestaltet.

Das Anhänger-Steuerventil 60 mündet in einen Anhänger-Steuerausgang 74. Über den Anhänger-Steuerausgang 74 der Parkbremseinrichtung 1 kann somit ein Steuermodul eines Anhängers bedarfsweise angesteuert werden, insbesondere zur Betätigung der Betriebsbremse eines Anhängers.

Darüber hinaus ist das Anhänger-Steuerventil 60 mit der Federbremsleitung 51 verbunden.

Anhand des Anhänger-Steuerventils 60 kann Druckluft von der Anhänger-Ventilleitung 61 oder von der Federbremsleitung 51 auf den Anhänger-Steuerausgang 74 übertragen bzw. übergeleitet werden.

Des Weiteren weist das Anhänger-Steuerventil 60 einen ersten Steuereingang 60a und einen zweiten Steuereingang 60b auf.

Der erste Steuereingang 60a ist mit der Anhänger-Ventilleitung 61 verbunden. Der zweite Steuereingang 60b ist mit der Federbremsleitung verbunden.

Das Anhänger-Steuerventils 60 ist schaltbar, indem an dem ersten Steueranschluss 60a und dem zweiten Steueranschluss 60b unterschiedliche Drücke anliegen.

Liegt an dem ersten Steueranschluss 60a in Verbindung mit der Anhänger-Ventilleitung ein höherer Druck an wird das Anhänger-Steuerventil 60 in eine Schaltstellung gebracht, so dass der Anhänger-Steuerausgang 74 mit der Anhänger-Ventilleitung 61 verbunden ist.

Liegt an dem zweiten Steueranschluss 60b in Verbindung mit der Federbremsleitung 51 ein höherer Druck an wird das Anhänger-Steuerventil 60 in eine Schaltstellung gebracht, so dass der Anhänger-Steuerausgang 74 mit der Federbremsleitung verbunden ist.

Liegen an dem ersten Steuereingang 60a und an dem zweiten Steuereingang 60b gleiche bzw. vergleichbare Drücke an, verbleibt das Anhänger-Steuerventils 60 in der vorliegenden Schaltstellung.

Im Folgenden wird die Wirkungsweise der Parkbremseinrichtung 1 gemäß den Figuren 1a bis 1f erläutert.

In einem **Parkzustand** (wie in Fig. 1a dargestellt) ist das Einlassventil 21 stromlos offen geschaltet. Das Steuerventil 30 ist im Parkzustand gemäß Fig. 1a stromlos geschlossen geschaltet. So kann Druckluft von dem Druckluftanschluss 10 bis zum Steuerventil 30 in die Steuerleitung 41 übertreten.

Anhand des geschlossen geschalteten Steuerventils 30 ist der Druck entlang der Steuerleitung 41 mit der ersten Abzweigung 41a und dem Steuereingang 41c des Relaisventils 40 gegenüber dem Luftdruckanschluss 10 abgesperrt.

Eine Verbindung zwischen der Federbremsleitung 51 und dem Anhänger-Steuerausgang 74 ist anhand des Anhänger-Steuerventils 60 getrennt.

Das Federbremsventil 50 ist im Parkzustand stromlos offen geschaltet. Somit ist die Rückkopplung über die Federbremsleitung 51 zwischen dem Ausgang 40b und dem Steuereingang 40c bereitgestellt.

Indem im Parkzustand der Druck am Steuereingang 40c des Relaisventils 40 unterhalb eines Schwelldrucks liegt, ist der Entlüftungsausgang 40d geöffnet.

Anhand des offen geschalteten Federbremsventils 50 ist die Steuerleitung 41 entlang der ersten Abzweigung 41a und die Federbremsleitung 51 über den Entlüftungsausgang 40d des Relaisventils 40 entlüftet.

Ebenso sind der wenigstens eine Federspeicherbremszylinderausgang 71 als auch der Betriebsbremsenausgang 72 zu einem Zugfahrzeug eines Kraftfahrzeuges entlüftet.

Der wenigstens eine Federspeicherbremszylinder der Parkbremse des Zugfahrzeugs ist somit im Parkzustand aktiviert und bringt eine Bremskraft auf.

Das Anhänger-Steuerventil 60 ist gegenüber der Anhänger-Ventilleitung 61 offen geschaltet. Somit kann ein hoher Druck von dem Druckluftanschluss 10 über das Einlassventil 21, die zweite Abzweigung 41b und das Anhänger-Steuerventil 60 an den Anhänger-Steuerausgang 74 der Parkbremseinrichtung 1 weitergeleitet werden.

In diesem Sinne ist der Anhänger-Steuerausgang 74 im Parkzustand belüftet. Ein Steuermodul des Anhängers kann somit entsprechend angesteuert werden.

In dem Fall gemäß Fig. 1a ist die Betriebsbremse des Anhängers anhand des belüfteten Anhänger-Steuerausgangs 74 im Parkzustand gelöst.

Es ist hierbei zu berücksichtigen, dass eine Betriebsbremse des Anhängers invers zu einer Betriebsbremse des Zugfahrzeuges angesteuert wird.

Um von einem Parkzustand in einen Fahrzustand zu gelangen wird gegenüber dem Parkzustand gemäß Fig. 1a das Steuerventil 30 in eine offene Position geschaltet, wie in Fig. 1b gezeigt. Druckluft kann somit von dem Druckluftanschluss 10 über das Einlassventil 21 und das Steuerventil 30 bis zur ersten Abzweigung 41a und zu dem Steuereingang 40c des Relaisventils 40 weitergeleitet werden.

Des Weiteren ist das Federbremsventil 50 geschlossen geschaltet. Ein hoher Druck in der Steuerleitung 30 kann somit nicht entlang der Federbremsleitung 51 bis zum Ausgang 40b des Relaisventils 40 gelangen.

Die Druckluft, die über das Einlassventil 21 in die Steuerleitung 41 einströmt, wird zur Belüftung der Anhänger-Ventilleitung 61 und insbesondere des Steuereingangs 40c des Relaisventils 40 eingesetzt.

Die Federbremsleitung 51 ist entlüftet und die Anhänger-Ventilleitung 61 belüftet, so dass das Anhänger-Steuerventil 60 gemäß Fig. 1b eine Verbindung zwischen dem Anhänger-Steuerausgang 74 und der Anhänger-Ventilleitung 61 bereitstellt.

Indem der Steuereingang 40c des Relaisventils 40 mit einem Druck versorgt wird, der höher als ein Schwelldruck liegt, wird eine Verbindung in dem Relaisventils 40 zwischen dem Eingang 40a und dem Ausgang 40b hergestellt.

Bei Erreichen des Schwelldrucks wird der Entlüftungsausgang 40d des Relaisventils 40 geschlossen.

Der Druck am Ausgang bzw. Arbeitsausgang 40b ist anhand des Drucks in der Steuerleitung 30 an dem Steuereingang 40c einstellbar. Vorzugsweise sind der Druck am Steuereingang 40c und am Ausgang bzw. Arbeitsausgang 40b des Relaisventils 40 proportional.

Ein hoher Druck am Ausgang 40b des Relaisventils wird zum Wechsel-Rückschlagventil 70 weitergeleitet. Dem höheren Druck folgend stellt das Wechsel-Rückschlagventil 70 die Verbindung zum Federspeicherbremszylinderausgang 71 her

Der wenigstens eine Federspeicherbremszylinder des Zugfahrzeugs kann belüftet werden.

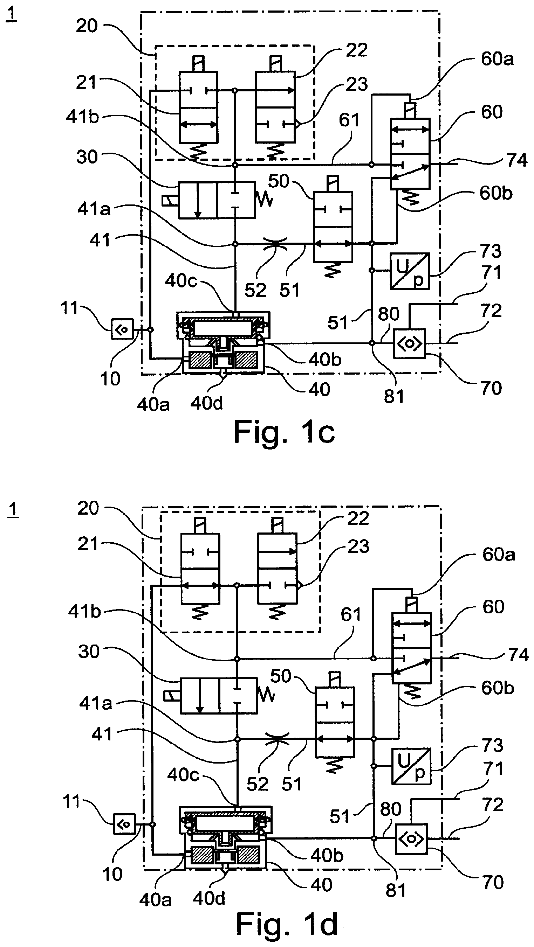

Sobald der gewünschte Druck an dem Ausgang 40b bzw. dem Steuereingang 40c des Relaisventils 40 erreicht ist, wird in einem nächsten Schritt gemäß Fig. 1c das Steuerventil 30 wieder in den stromlos geschlossenen bzw. getrennten Zustand gebracht.

Das Federbremsventil 50 wird in den stromlos offenen Zustand geschaltet. Ein hoher Druck an der ersten Abzweigung 41a und in der Federbremsleitung 51 ist somit zwischen dem Steuerventil 30 und dem Relaisventil 40 eingesperrt.

Nach Fig. 1c ist das Einlassventil 21 in diesem nächsten Schritt geschlossen geschaltet.

Die zweite Abzweigung 41b mit der Anhänger-Ventilleitung 61 kann über das offen geschaltete Entlüftungsventil 22 entlüftet werden.

Die Druckdifferenz zwischen der entlüfteten Anhänger-Ventilleitung 61 an dem ersten Steueranschluss 60a und der belüfteten Federbremsleitung 51 an dem zweiten Steueranschluss 60b führt zu einem Umschalten des Anhänger-Steuerventils 60.

Das Anhänger-Steuerventil 60 stellt eine Verbindung zwischen dem Anhänger-Steuerausgang 74 und der belüfteten Federbremsleitung 51 bereit.

Es ist ein kombiniertes Bremsen durch die Belüftung des Federspeicherbremszylinderausgangs 71 und des Anhänger-Steuerausgangs 74 verfügbar.

Im **dauerhaften Fahrzustand,** gemäß Fig. 1d, ist das Entlüftungsventil 22 wieder geschlossen geschaltet und das Einlassventil 21 wiederrum offen geschaltet. So kann Druckluft bedarfsweise vorgehalten werden, insbesondere in der Steuerleitung bis zum Steuerventil 30 und der Anhänger-Ventilleitung 61.

Sowohl der erste Steuereingang 60a als auch der zweite Steuereingang 60b sind belüftet. Aufgrund der mangelnden Druckdifferenz verbleibt das Anhänger-Steuerventil in der vorliegenden Schaltstellung.

Nach Fig. 1d liegt im Fahrzustand eine Verbindung zwischen der Federbremsleitung 51 und dem Anhänger-Steuerausgang 74 vor.

In der Folge ist der Anhänger-Steuerausgang 74 sowie der Federspeicherbremszylinderausgang 71 über die Federbremsleitung 51 belüftet.

Das heißt, die Betriebsbremse des Anhängers sowie die Parkbremse des Zugfahrzeugs sind gelöst und bringen keine Bremskraft auf. So wird der Fahrzustand des Kraftfahrzeuges ermöglicht.

Im Allgemeinen kann der Betriebsbremsenausgang 72 die Betriebsbremse eines Zugfahrzeuges über ein weiteres Entlüftungsventil (in Figuren 1a bis 1f nicht gezeigt) entlüftet werden. Die Betriebsbremse des Zugfahrzeuges ist gemäß Fig. 1d im Fahrzustand somit gelöst. Insbesondere kann die Betriebsbremse des Zugfahrzeugs im Sinne der vorliegenden Erfindung als ausschließlich aktiv bzw. aktiviert aufgefasst werden, wenn sie direkt betätigt wird.

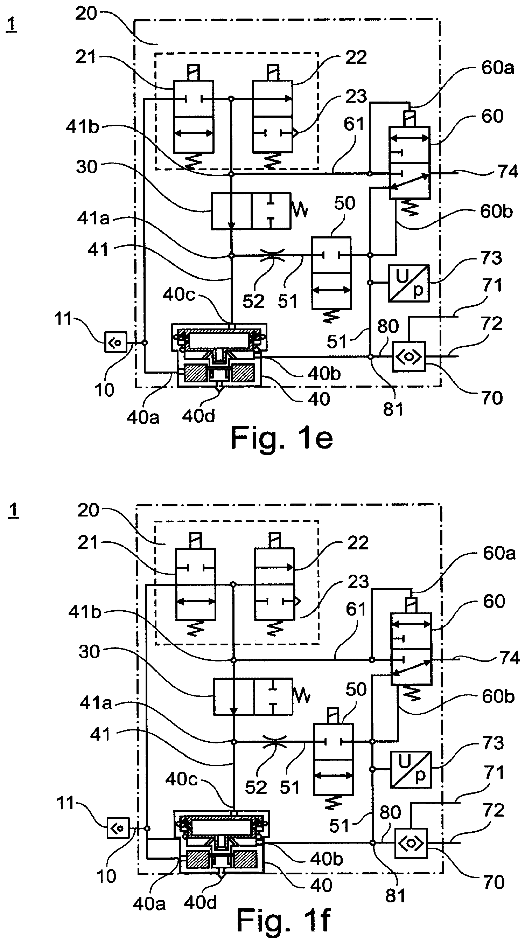

Um gemäß Fig. 1e von einem **Fahrzustand in einen Parkzustand** zu gelangen wird das Federbremsventil 50 in eine geschlossene Position gebracht, so dass die Federbremsleitung 51 gesperrt ist. Ebenso wird das Einlassventil 21 gesperrt.

Das Steuerventil 30 und das Entlüftungsventil 22 werden geöffnet.

Es findet eine Entlüftung der Steuerleitung 41, der Federbremsleitung 51 bis zum Federbremsventil 50 und der Anhänger-Ventilleitung 61 bis zum Anhänger-Steuerventil 60 über das Entlüftungsventil 22 statt.

Über die Steuerleitung 41 wird auch der Steuereingang 40c des Relaisventils 40 entlüftet.

Sobald der Druck an dem Steuereingang 40c des Relaisventils unter einen Schwelldruck fällt, wird die Verbindung zwischen dem Eingang 40a und dem Ausgang 40b geschlossen. Gleichzeitig wird die Verbindung zwischen dem Ausgang 40b und dem Entlüftungsausgang 40d des Relaisventils geöffnet.

Auf diese Weise wird der Ausgang 40b des Relaisventils in Verbindung mit dem Anhänger-Steuerausgang 74 und dem Federspeicherbremszylinderausgang 71 entlüftet.

Der erste Steueranschluss 60a und der zweite Steueranschluss 60b weisen aufgrund der Entlüftung über das Entlüftungsventil 22 und den Entlüftungsausgang 40d des Relaisventils weiterhin gleiche Drücke auf. Das Anhänger-Steuerventil 60 verbleibt gemäß Fig. 1e in der Schaltstellung zur Verbindung der Federbremsleitung 51 mit dem Anhänger-Steuerausgang 74.

Der wenigstens eine Federspeicherbremszylinder des Zugfahrzeuges ist anhand des entlüfteten Federspeicherbremszylinderausgang 71 als Parkbremse wieder aktiv.

Anschließend werden das Steuerventil 30 und das Entlüftungsventil 22 für den Parkzustand, nach Fig. 1a, wieder geschlossen. Das Einlassventil 21 sowie das Federbremsventil 50 werden geöffnet.

Indem die Anhänger-Ventilleitung 61 über das Einlassventil 21 belüftet wird und die Federbremsleitung 51 über den Entlüftungsausgang 40d entlüftet ist, erfolgt ein Umschalten des Anhänger-Steuerventil 60 für den Parkzustand nach Fig. 1a.

Das Anhänger-Steuerventil 60 stellt in Fig. 1a eine Verbindung des Anhänger-Steuerausgangs 74 mit der Anhänger-Ventilleitung 61 her.

Im Ergebnis ist der Anhänger-Steuerausgang 74 belüftet. Der Federspeicherbremszylinderausgang 71 und der Betriebsbremsenausgang 72 sind entlüftet.

Somit ist die Parkbremse des Zugfahrzeuges in Form des wenigstens einen Federspeicherbremszylinders im Parkzustand aktiv geschaltet. Die Betriebsbremse des Anhängers ist gelöst.

Um einen **abgestuften Bremszustand** aus dem Fahrzustand (gemäß Fig. 1d) heraus zu erreichen, wird nach Fig. 1f ein spezifischer, konstanter Druck bzw. Druckbereich an dem Ausgang 40b des Relaisventils 40 eingestellt.

Hierzu wird das Federbremsventil 50 geschlossen geschaltet. Die Federbremsleitung 51 ist somit unterbrochen. Das Steuerventil 30 wird offen geschaltet.

Aus dem Fahrzustand heraus ist das Anhänger-Steuerventil in Fig. 1f weiterhin derart geschaltet, dass eine Verbindung zwischen der Federbremsleitung 51 und dem Anhänger-Steuerausgang 74 vorliegt.

Das Einlassventil 21 und das Entlüftungsventil 22 werden im Sinne von Fig. 1f derart offen bzw. getrennt geschaltet, um den Steuereingang 40c des Relaisventils 40 hinreichend zu belüften bzw. zu entlüften, bis ein gewünschter Druck am Ausgang 40b des Relaisventils 40 eingestellt ist.

Vorzugsweise werden das Einlassventil 21 und das Entlüftungsventil 22 mit dem Entlüftungsausgang 23 teilweise offen bzw. durchlässig geschaltet, insbesondere durch mehrere kurze, aufeinanderfolgende Betätigungen.

Anhand der teilweise offenen Schaltstellung des Einlassventils 21 und des Entlüftungsventil 22 ist die Schaltstellung des Relaisventils 40 über den Steuereingang 40c regulierbar.

Indem gegenüber dem Fahrzustand weiterhin vergleichbare Drücke an dem ersten Steueranschluss 60a und dem zweiten Steueranschluss 60b des Anhänger-Steuerventils 60 vorliegen, erfolgt kein entsprechendes Umschalten.

Des Weiteren ist anhand der zumindest teilweise offenen Schaltstellung des Einlassventils 21 und des Entlüftungsventil 22 eine abstufbare Bremswirkung durch entsprechendes Anpassen des Drucks an dem Steuereingang 40c des Relaisventils 40 möglich.

Durch das geschlossen geschaltete Federbremsventil 50 kann ein an dem Ausgang 40b eingestellter Druck eingeschlossen und gehalten werden. Über das Wechsel-Rückschlagventil 70 hinweg ist der Federspeicherbremszylinderausgang 71 entsprechend mit dem eingestellten Druck belüftet.

Indem der Anhänger-Steuerausgang 74 mit der Federbremsleitung 51 über das Anhänger-Steuerventil 60 verbunden geschaltet ist, kann Druckluft von dem Ausgang 40b des Relaisventils 40 nach Fig. 1f sowohl auf den Anhänger-Steuerausgang 74 als auch den Federspeicherbremszylinderausgang 71 übertragen werden.

In Abhängigkeit von dem Druck an dem Ausgang 40c wird eine bedarfsweise Bremswirkung durch die Betriebsbremse des Anhängers sowie die Parkbremse des Zugfahrzeugs, in Form von wenigstens einem Federspeicherbremszylinder, bereitgestellt.

Darüber hinaus ist es auch möglich einen **Stretch-Brake-Zustand** mit dem ersten Ausführungsbeispiel im Sinne der Fig. 1a bis 1f umzusetzen, insbesondere aus einem Fahrzustand gemäß Fig. 1d heraus. Das Umschalten in den Betriebszustand für die Stretch-Brake-Funktion orientiert sich im Wesentlichen an den vorstehend beschrieben Schaltvorgängen.

Vorzugsweise ist der Federspeicherbremszylinderausgang 71 in dem Stretch-Brake-Zustand belüftet.

Der Anhänger-Steuerausgang 74 ist bedarfsweise entlüftbar bzw. belüftbar, insbesondere anhand des Anhänger-Steuerventils 60.

So kann der Anhänger-Steuerausgang 74 zweckmäßig, insbesondere abstufbar, mit Druckluft belüftet werden. Es ist eine abstufbare Bremswirkung anhand der Betriebsbremse des Anhängers verfügbar, um das Kraftfahrzeug zu strecken und auf diese Weise zu stabilisieren.

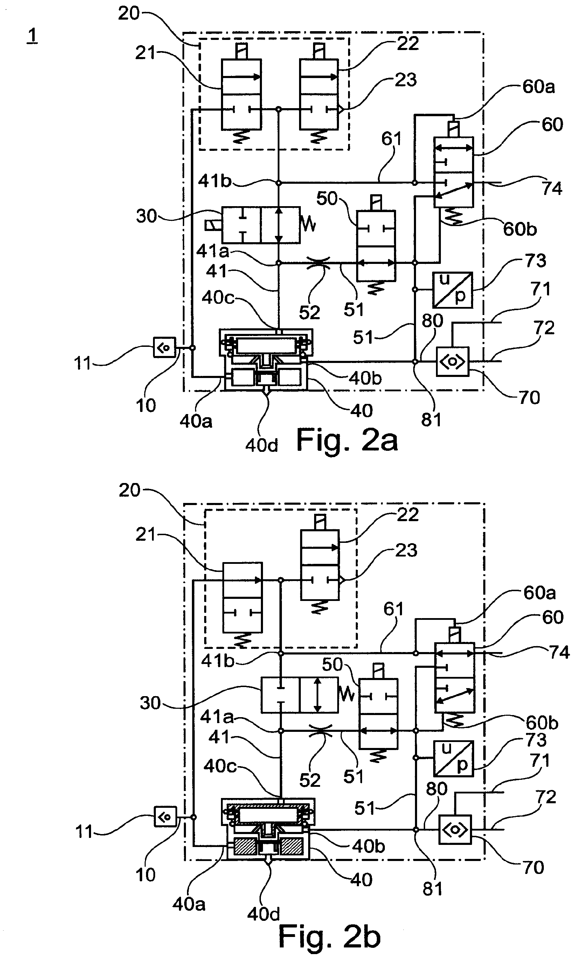

Die **Figuren 2a bis 2f** zeigen in schematischer Darstellung ein zweites Ausführungsbeispiel einer Parkbremseinrichtung 1 für Kraftfahrzeuge, insbesondere verschiedene Schaltzustände bzw. Betriebszustände dieses zweiten Ausführungsbeispiels.

Dieses zweite Ausführungsbeispiel unterscheidet sich gemäß Fig. 2a von der Ausführung nach Fig. 1a in einem **Parkzustand** darin, dass das Einlassventil 21 der Einlass-Entlüftungs-Magnetventileinheit 20 stromlos geschlossen geschaltet ist. Das Steuerventil 30 ist stromlos offen geschaltet. Das Anhänger-Steuerventil 60 ist derart geschaltet, dass eine Verbindung zwischen dem Anhänger-Steuerausgang 74 und der Federbremsleitung 51 vorliegt.

Des Weiteren ist das Federbremsventil 50 im Parkzustand, wie in Fig. 1a und 2a gezeigt, offen bzw. durchlässig geschaltet.

In der Folge sind der Anhänger-Steuerausgang 74, der Federspeicherbremszylinderausgang 71 und der Betriebsbremsenausgang 72 entlüftet.

Der wenigstens eine Federspeicherbremszylinder des Zugfahrzeugs ist somit aktiviert.

Ebenso ist das Steuermodul eines Anhängers über den Anhänger-Steuerausgang 74 derart angesteuert bzw. entlüftet, dass eine Betriebsbremse des Anhängers aktiv ist.

In diesem Zusammenhang weist das zweite Ausführungsbeispiel gemäß Fig. 2b bevorzugter Weise einen weiteren Betriebszustand, den **Trailer-Tost-Zustand,** auf.

Der Trailer-Test-Zustand dient zur Überprüfung der Bremskraft des wenigstens einen Federspeicherbremszylinders als Parkbremse, sofern die gemäß dem zweiten Ausführungsbeispiel üblicherweise im Parkzustand aktive Bremsfunktion des Anhängers ausfallen sollte. Dies kann insbesondere beim Parken des Kraftfahrzeuges an einem Gefälle relevant sein.

Zur Ausübung des **Trailer-Test-Zustands** wird aus dem Parkzustand (wie in Fig. 2a gezeigt) heraus das Einlassventil 21 gemäß Fig. 2b offen geschaltet. Das Steuerventil 30 wird geschlossen geschaltet.

Druckluft kann sich von dem Druckluftanschluss 10 aus somit entlang der Steuerleitung 41 bis zur zweiten Abzweigung 41b und dem Steuerventil 30 sowie entlang der Anhänger-Ventilleitung 61 ausbreiten.

Der Steuereingang 40c des Relaisventils 40 sowie die Federbremsleitung 50 sind von der Druckluftzufuhr des Druckluftanschlusses 10 anhand des getrennt geschalteten Steuerventils 30 abgeschnitten.

Der erste Steuereingang 60a ist in Fig. 2b belüftet, wobei der zweite Steuereingang 60b der Anhänger-Ventileinheit 60 entlüftet ist. Das Anhänger-Steuerventil 60 ist somit derart geschaltet, dass eine Verbindung zwischen der Anhänger-Ventilleitung 61 und dem Anhänger-Steuerausgang 74 vorliegt.

Der Anhänger-Steuerausgang 74 ist belüftet. Der Anhänger bzw. die Betriebsbremse des Anhängers ist gelöst und bringt keine Bremswirkung auf.

Hingegen ist der Federspeicherbremszylinderausgang 71 aus dem Parkzustand heraus weiterhin entlüftet und der wenigstens eine Federspeicherbremszylinder des Zugfahrzeugs ist aktiviert.

Auf diese Weise kann die Parkbremse des Zugfahrzeuges, in Form wenigstens eines Federspeicherbremszylinders an dem entlüfteten Federspeicherbremszylinderausgang 71, auf eine hinreichende Bremskraft überprüft werden.

Des Weiteren kann im Sinne des ersten Ausführungsbeispiels gemäß den Figuren 2a bis 2f auch ein Stretch-Break-Zustand vorgesehen sein.

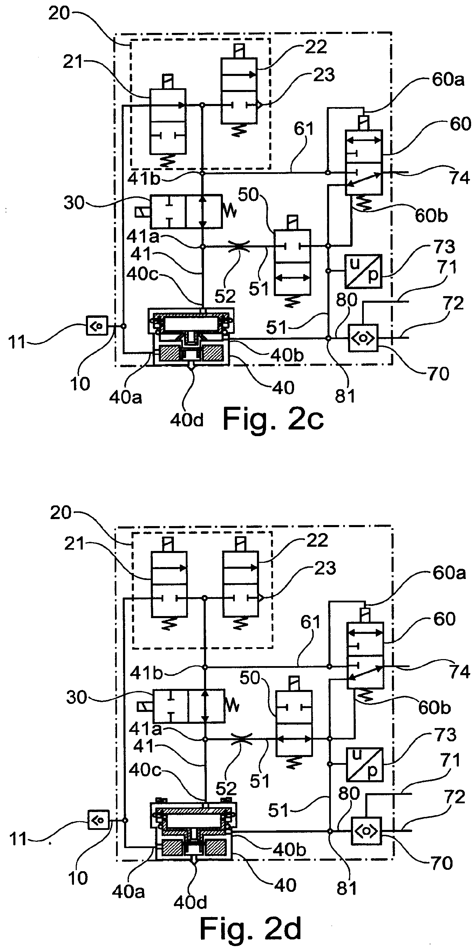

Von einem **Parkzustand in einen Fahrzustand** wird das Einlassventil 21 gemäß Fig. 2c offen geschaltet. Das Steuerventil 30 ist offen geschaltet. Das Federbremsventil 50 ist geschlossen geschaltet.

Druckluft kann von dem Druckluftanschluss 10 bis zu dem Steuereingang 40c des Relaisventils 40 weitergeleitet werden.

An dem Ausgang 40b des Relaisventils 40 kann, abhängig von dem Druck an dem Steuereingang 40c, ein spezifischer Fluiddruck über die Verbindung zwischen Eingang 40a und Ausgang 40b des Relaisventils 40 eingestellt werden. Der Entlüftungsaufgang 40d des Relaisventils 40 ist geschlossen.

Der Druck an dem Ausgang 40b des Relaisventils 40 wird wiederrum über das Anhänger-Steuerventil 60 an den Anhänger-Steuerausgang 74 weitergeleitet.

Insbesondere liegen beim Übergang von dem Parkzustand (wie in Fig. 2a dargestellt) in den Fahrzustand im Sinne von Fig. 2c an dem ersten Steuereingang 60a und dem zweiten Steuereingang 60b stets vergleichbare Druckverhältnisse vor, so dass kein Umschalten des Anhänger-Steuerventils 60 erfolgt.

Der Federspeicherbremszylinderausgang 71 wird über das Wechsel-Rückschlagventil 70 gemäß dem vorliegenden Druckgefälle belüftet.

Sobald ein gewünschter Druck an dem Steuereingang 40c des Relaisventils vorliegt, wird das Eingangsventil 21 für den Fahrzustand nach Fig. 2d getrennt geschaltet. Das Federbremsventil 50 wird für den Fahrzustand gemäß Fig. 2d offen bzw. durchlässig geschaltet.

Nach Fig. 2d liegt im Fahrzustand somit eine Rückkopplung zwischen Ausgang 40b und Steuereingang 40c des Relaisventils 40 über das Federbremsventil 50 und die Drosseleinheit 52 entlang der Federbremsleitung 51 vor.

In der Folge wird ein geeigneter **Fahrzustand** in Form des belüfteten Anhänger-Steuerausgangs 74, des belüfteten Federspeicherbremszylinderausgangs 71 und des entlüfteten Betriebsbremsenausgangs 72 erzielt.

In diesem Sinne sind die Betriebsbremse des Anhängers sowie die Parkbremse und die Betriebsbremse des Zugfahrzeugs gelöst.

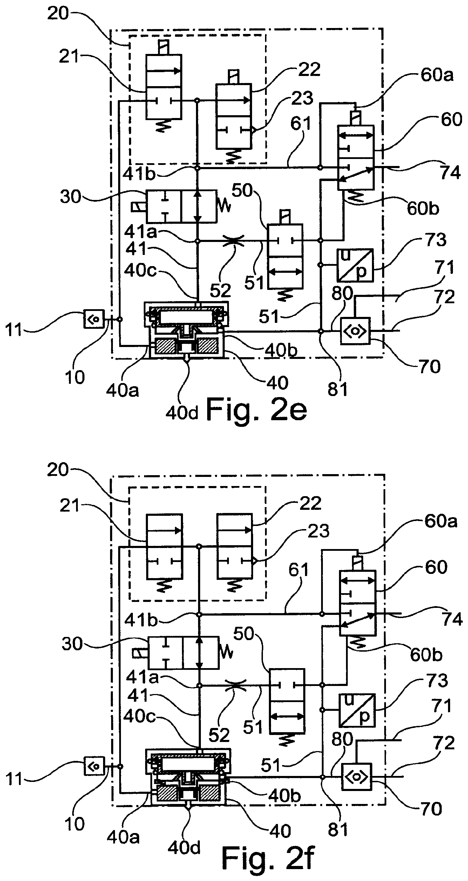

Um von dem **Fahrzustand in den Parkzustand** zu gelangen, wird das Federbremsventil 50 gemäß Fig. 2e getrennt geschaltet. Das Entlüftungsventil 22 wird offen bzw. durchlässig geschaltet.

Anhand des bereits offen geschalteten Steuerventils 30, wird die Steuerleitung 41 nach Fig. 2e bis zu dem Steuereingang 40c des Relaisventils 40 über das Entlüftungsventil 22 mit dem Entlüftungsausgang 23 entlüftet.

Eine Verbindung zwischen dem Eingang 40a und dem Ausgang 40b des Relaisventils wird getrennt. Der Entlüftungsausgang 40d des Relaisventils 40d wird geöffnet. Es findet eine Entlüftung der Federbremsleitung 51 bis zu dem getrennt geschalteten Federbremsventil 50 statt.

Ebenso werden der mit der Federbremsleitung 51 verbundenen Federspeicherbremsylinderausgang 71 und der Anhänger-Steuerausgang 74 über den Entlüftungsausgang 40d entlüftet.

In der Folge ist der wenigstens eine Federspeicherbremszylinder aktiviert, sowie die Betriebsbremse des Anhängers.

Für den Parkzustand (wie in Fig. 2a gezeigt) wird das Federbremsventil 50 anschließend durchlässig geschaltet. Ebenso wird das Entlüftungsventil 22 getrennt geschaltet.

In einem weiteren Betriebszustand kann ein **abgestufter Bremszustand** nach Fig. 2f durch einen eingestellten, konstanten Druck an dem Ausgang 40b des Relaisventils 40 bereitgestellt werden, vorzugsweise aus dem Fahrzustand nach Fig. 2d heraus.

Hierzu ist das Steuerventil 30 offen geschaltet. Das Federbremsventil 50 ist getrennt geschaltet. Somit ist die Rückkopplung über die Federbremsleitung 51 getrennt.

Das Einlassventil 21 und das Entlüftungsventil 22 sind nach Bedarf teilweise offen geschaltet.

Über das offen geschaltete Steuerventil 30 kann ein spezifischer Druck an dem Steuereingang 40c des Relaisventils 40 angelegt werden.

Am Ausgang 40b des Relaisventils 40 ist der Druck somit einstellbar, insbesondere durch entsprechende Steuerung des Einlassventils 21 und des Entlüftungsventils 22 gemäß Fig. 2f.

In diesem Sinne kann an dem Ausgang 40b des Relaisventils 40 ein konstanter Druck über einen spezifischen Zeitraum gehalten und stufenweise verändert werden.

Das geschlossen geschaltete Federbremsventil 50 verhindert dabei eine Rückkopplung zwischen dem Ausgang 40b und dem Steuereingang 40c des Relaisventils. Insbesondere wird somit auch ein Luftverlust über das Entlüftungsventil 22 vermieden.

Anhand gleicher Drücke an dem ersten und zweiten Steuereingang 60a, b ist das Anhänger-Steuerventil 60 dabei wie im Fahrzustand derart geschaltet, dass der Anhänger-Steuerausgang 74 mit der Federbremsleitung 51 verbunden ist.

Somit wird der Anhänger-Steuerausgang 74 mit der Druckluft vom Ausgang 40b des Relaisventils 40 belüftet. Ebenso wird der Federspeicherbremszylinderausgang 71 im Sinne des Druckgefälles über das Wechsel-Rückschlagventil 70 hinweg belüftet.

Es ist eine gezielte, teilweise Bremswirkung des wenigstens einen Federspeicherbremszylinders des Zugfahrzeugs sowie der Betriebsbremse des Anhängers einstellbar.

Indem der Federspeicherbremszylinderausgang 71 und der Anhänger-Steuerausgang 74 mit zeitweise konstanten, stufenweise veränderten Drücken belüftet werden, ist die Bremswirkung des Zugfahrzeugs und des Anhängers stufenweise variierbar.

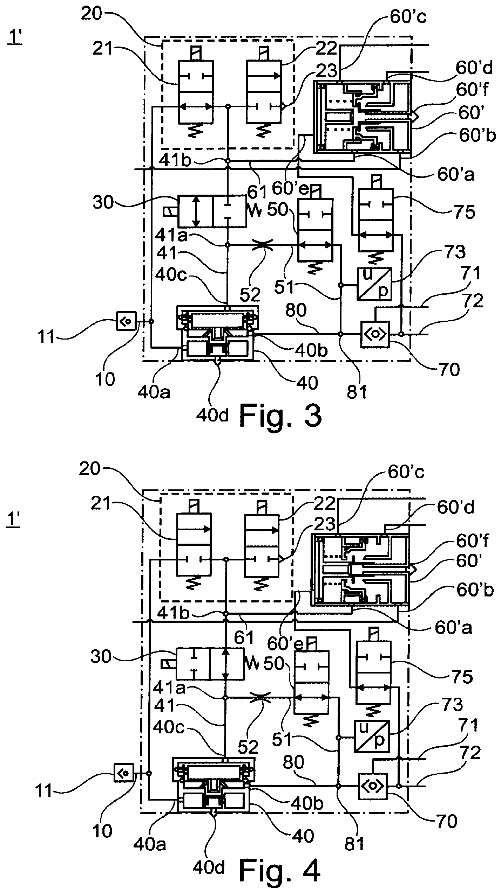

**Fig. 3** zeigt in schematischer Darstellung ein erstes Ausführungsbeispiel einer Parkbremseinrichtung 1' für Kraftfahrzeuge mit einem integrierten Anhänger-Steuermodul.

Das Ausführungsbeispiel einer Parkbremseinrichtung 1' gemäß Fig. 3 unterscheidet sich von dem ersten Ausführungsbeispiel gemäß den Figuren 1a bis 1f insbesondere durch die Ausgestaltung der Anhänger-Ventileinheit als ein integriertes Anhänger-Steuermodul 60'.

Das integrierte Anhänger-Steuermodul 60' der Parkbremseinrichtung 1' weist einen Steuereingang 60'a, einen Versorgungseingang 60'b, einen Steuerausgang 60'c, einen Versorgungsausgang 60'd, einen Rückkopplungsanschluss 60'e sowie einen Entlüftungsausgang 60'f auf.

Der Steuereingang 60'a des Anhänger-Steuermoduls 60' ist mit der Anhänger-Ventilleitung 61 verbunden. Der Versorgungseingang 60'b kann mit einer externen Druckluftquelle oder dergleichen verbunden sein.

Der Steuerausgang 60'c und der Versorgungsausgang 60'd des Anhänger-Steuermoduls 60' führen über entsprechende Leitungen zu dem Anhänger bzw. dem Bremssystem des Anhängers.

Des Weiteren weist die Parkbremseinrichtung 1' ein Bremsventil 75 auf.

Das Bremsventil 75 ist, vorzugsweise als ein 2/2-Wegeventil, stromlos offen geschaltet.

Das Bremsventil 75 ist mit dem Betriebsbremsenausgang 72 verbunden.

Des Weiteren ist der Rückkopplungsanschluss 60'e des Anhänger-Steuermoduls 60' mit dem Bremsventil 75 verbunden.

Es liegt eine Rückkopplung von dem Betriebsbremsenausgang 72 über das Bremsventil 75 zu dem Anhänger-Steuermodul 60', insbesondere dem Rückkopplungsanschluss 60'e, vor.

Ein Fluiddruck des Betriebsbremsenanschluss 72 kann somit an das integrierte Anhänger-Steuermodul 60' weitergeleitet werden, um einen Bremseffekt an dem Anhänger auszuüben.

Bei Betätigung der Betriebsbremse des Zugfahrzeugs und dem dabei entstehenden Druck an dem Betriebsbremsenausgang 72, ist somit eine kombinierte Bremswirkung mittels des Rückkopplungsanschlusses 60'e verfügbar.

Ebenso wie in Fig. 1a gezeigt, ist das Einlassventil 21 im **Parkzustand** gemäß Fig. 3 stromlos offen geschaltet und das Steuerventil 30 ist stromlos getrennt geschaltet.

Die Umschaltung zwischen den Betriebszuständen erfolgt anhand der Parkbremseinrichtung 1' gemäß Fig. 3 in vergleichbarer Form wie bereits mit Bezug auf die Figuren 1a bis 1f beschrieben.

Die Ansteuerung des Anhänger-Steuermoduls 60' erfolgt hingegen anhand des Rückkopplungsanschlusses 60'e in Verbindung mit dem Betriebsbremsenausgang 72 und der Anhänger-Ventilleitung 61 über die zweite Abzweigung 41b der Steuerleitung 41.

Hierzu kann eine Rückkopplung des Luftdrucks von dem Betriebsbremsenausgang 72 zu dem Rückkopplungsanschluss 60'e durch Schalten des Bremsventils 75 in einen getrennten bzw. geschlossenen Zustand bedarfsweise unterbunden werden.

Fig. 4 zeigt in schematischer Darstellung ein zweites Ausführungsbeispiel einer Parkbremseinrichtung 1' für Kraftfahrzeuge mit einem integrierten Anhänger-Steuermodul.

Das Ausführungsbeispiel einer Parkbremseinrichtung 1' gemäß Fig. 4 unterscheidet sich von dem zweiten Ausführungsbeispiel gemäß den Figuren 2a bis 2f insbesondere durch die Ausgestaltung der Anhänger-Ventileinheit als ein integriertes Anhänger-Steuermodul 60'.

Das Anhänger-Steuermodul 60' ist dabei in gleicher Form vorgesehen, wie mit Bezug auf Fig. 3 beschrieben.

Des Weiteren weist das Ausführungsbeispiel der Parkbremsrichtung 1' nach Fig. 4, ebenso wie das Ausführungsbeispiel gemäß Fig. 3, das Bremsventil 75 auf.

Somit ist eine rückkoppelnde Verbindung zwischen dem Rückkopplungsanschluss 60'e und dem Betriebsbremsenanschluss 72 gemäß Fig. 4 vorgesehen.

Wie bereits in Fig. 2 gezeigt, ist das Einlassventil 21 nach Fig. 4 stromlos getrennt geschaltet und das Steuerventil 30 ist stromlos offen geschaltet.

Eine Umschaltung zwischen den Betriebszuständen erfolgt für das Ausführungsbeispiel nach Fig. 4 in vergleichbarer Form wie mit Bezug auf die Figuren 2a bis 2f beschrieben.

So ist neben einem Parkzustand, einem Fahrzustand und einem abgestuften Bremszustand auch ein Trailer-Test-Zustand für die Ausführung nach Fig. 4 vorgesehen. Auf diese Weise kann eine hinreichende Bremswirkung des Zugfahrzeuges für den Fall sichergestellt werden, dass im Parkzustand an einem Gefälle die Bremsvorrichtung des Anhängers ausfallen könnte.

Allgemein kann im Sinne der vorliegenden Erfindung anhand der Drosseleinheit 52 und insbesondere anhand des Federbremsventil 50 somit eine vorteilhafte Umschaltung zwischen den Betriebszuständen erreicht werden, indem die rückkoppelnde Federbremsleitung 51 bedarfsweise gesperrt sein kann.

### BEZUGSZEICHENLISTE

- 1: Parkbremseinrichtung
- 10: Druckluftanschluss
- 11: Rückschlagventil
- 20: Einlass-Entlüftungs-Magnetventileinheit
- 21: Einlassventil
- 22: Entlüftungsventil
- 23: Entlüftungsausgang
- 30: Steuerventil
- 40: Relaisventil
- 40a: Eingang
- 40b: Ausgang
- 40c: Steuereingang
- 40d: Entlüftungsausgang
- 41: Steuerleitung
- 41a: erste Abzweigung
- 41b: zweite Abzweigung
- 50: Federbremsventil
- 51: Federbremsleitung
- 52: Drosseleinheit
- 60: Anhänger-Ventileinheit; Anhänger-Steuerventil
- 60': Anhänger-Ventileinheit; Anhänger-Steuermodul
- 60'a: Steuereingang
- 60'b: Versorgungseingang
- 60'c: Steuerausgang
- 60'd: Versorgungsausgang
- 60'e: Rückkopplungsanschluss
- 60'f: Entlüftungsausgang
- 61: Anhänger-Ventilleitung
- 70: Wechsel-Rückschlagventil
- 71: Federspeicherbremszylinderausgang
- 72: Betriebsbremsenausgang
- 73: Druckluftsensor
- 74: Anhänger-Steuerausgang
- 75: Bremsventil
- 80: erste Ausgangsleitung
- 81: Ausgangs-Abzweigung

## Patentansprüche

1. Parkbremseinrichtung (1; 1') für Kraftfahrzeuge mit wenigstens einem
Druckluftanschluss (10), einer Einlass-Entlüftungs-Magnetventileinheit (20), einem Relaisventil (40) und wenigstens einen ersten Druckluftausgang (71; 72),
wobei der Druckluftanschluss (10) mit der Einlass-Entlüftungs-Magnetventileinheit (20) und dem Relaisventil (40) verbunden ist,
wobei eine Steuerleitung (41) derart vorgesehen ist, so dass das Relaisventils (40) mit der Einlass-Entlüftungs-Magnetventileinheit (20) verbunden oder verbindbar ist,
wobei die Steuerleitung (41) stromaufwärts des Relaisventils (40) eine erste Abzweigung (41a) und eine zweite Abzweigung (41b) aufweist,
wobei eine Ausgangsleitung (80) vorgesehen ist, die mit dem wenigstens einen ersten Druckluftausgang (71; 72) verbunden ist und eine Ausgangs-Abzweigung (81) aufweist,
**dadurch gekennzeichnet, dass**
eine Federbremsleitung (51) vorgesehen ist, die über die erste Abzweigung (41a) mit der Steuerleitung (41) und über die Ausgangs-Abzweigung (81) mit der Ausgangsleitung (80) verbunden ist, und eine Anhänger-Ventilleitung (61) vorgesehen ist, die über die zweite Abzweigung (41b) mit der Steuerleitung (41) verbunden ist, wobei die Parkbremseinrichtung (1; 1') ein Federbremsventil (50) aufweist, das in der Federbremsleitung (51) angeordnet ist und mit dem Relaisventil (40) verbunden ist, und eine Drosseleinheit (52), die in der Federbremsleitung (51) zwischen der Ausgangs-Abzweigung (81) der Ausgangsleitung (80) und der ersten Abzweigung (41a) der Steuerleitung (41) angeordnet ist.

2. Parkbremseinrichtung (1; 1') nach Anspruch 1,
**dadurch gekennzeichnet, dass**
die Federbremsleitung (51) über die Drosseleinheit (52) und das Federbremsventil (50) eine Rückkopplungsverbindung zu dem Relaisventil (40) ausbildet,

3. Parkbremseinrichtung (1; 1') nach Anspruch 1 oder 2,
**dadurch gekennzeichnet, dass**
das Federbremsventil (50) als ein stromlos offenes Magnetventil vorgesehen ist, so dass im stromlosen Zustand des Federbremsventils (50) zwischen einem Steuereingang (40c) und einem Ausgang (40b) des Relaisventils (40) eine Rückkopplung über die Steuerleitung (41), die Federbremsleitung (51) und die Ausgangsleitung (80) mit dem Federbremsventil (50) und der Drosseleinheit (52) vorliegt.

4. Parkbremseinrichtung (1; 1') nach einem der vorhergehenden Ansprüche,
**dadurch gekennzeichnet, dass**
zwischen der ersten Abzweigung (41a) und der zweiten Abzweigung (41b) der Steuerleitung (41) ein Steuerventil (30) angeordnet ist.

5. Parkbremseinrichtung (1; 1') nach einem der vorhergehenden Ansprüche,
**dadurch gekennzeichnet, dass**
ein Einlassventil (21) der Einlass-Entlüftungs-Magnetventileinheit (20) als ein stromlos offenes Magnetventil und das Steuerventil (30) als ein stromlos geschlossenes Magnetventil vorgesehen ist.

6. Parkbremseinrichtung (1; 1') nach einem der Ansprüche 1 bis 4,
**dadurch gekennzeichnet, dass**
das Einlassventil (21) der Einlass-Entlüftungs-Magnetventileinheit (20) als ein stromlos geschlossenes Magnetventil und das Steuerventil (30) als ein stromlos offenes Magnetventil vorgesehen ist.

7. Parkbremseinrichtung (1; 1') nach einem der vorhergehenden Ansprüche,
**dadurch gekennzeichnet, dass**
die Parkbremseinrichtung (1; 1') eine Anhänger-Ventileinheit (60; 60') aufweist, die über die Anhänger-Ventilleitung (61), die zweite Abzweigung (41b) und die Steuerleitung (41) mit der Einlass-Entlüftungs-Magnetventileinheit (20) verbunden ist.

8. Parkbremseinrichtung (1) nach einem der vorhergehenden Ansprüche,
**dadurch gekennzeichnet, dass**
die Anhänger-Ventileinheit ein Anhänger-Steuerventil (60) ist, das mit der Federbremsleitung (51) und über die Federbremsleitung (51) mit dem Federbremsventil (50) und dem Relaisventil (40) verbunden ist.

9. Parkbremseinrichtung (1') nach einem der Ansprüche 1 bis 7,
**dadurch gekennzeichnet, dass**
die Anhänger-Ventileinheit als ein in die Parkbremseinrichtung (1') integriertes Anhänger-Steuermodul (60') ausgebildet ist.

10. Parkbremseinrichtung (1; 1') nach einem der vorhergehenden Ansprüche,
**dadurch gekennzeichnet, dass**
die Einlass-Entlüftungs-Magnetventileinheit (20) derart ausgestaltet ist, dass zwischen dem Druckluftanschluss (10) und der Steuerleitung (41) wenigstens ein Einlassventil (21) und zwischen der Steuerleitung (41) und einem Entlüftungsausgang (23) ein Entlüftungsventil (22) vorgesehen ist.

## Claims

1. A parking brake device (1; 1') for motor vehicles, having at least one compressed-air port (10), an inlet bleed solenoid valve unit (20), a relay valve (40) and at least one first compressed-air output (71; 72),
the compressed-air port (10) being connected to the inlet bleed solenoid valve unit (20) and to the relay valve (40),
a control line (41) being provided such that the relay valve (40) is connected or connectable to the inlet bleed solenoid valve unit (20),
the control line (41) having a first branching-off point (41a) and a second branching-off point (41b) upstream of the relay valve (40),
there being provided an output line (80) that is connected to the at least one first compressed-air output (71; 72) and has an output branching-off point (81),
**characterised in that**
there is provided a spring-brake line (51), which is connected to the control line (41) via the first branching-off point (41a) and to the output line (80) via the output branching-off point (81), and a trailer valve line (61), which is connected to the control line (41) via the second branching-off point (41b), the parking brake device (1; 1') having a spring-brake valve (50) that is arranged in the spring-brake line (51) and connected to the relay valve (40), and a restrictor unit (52) being arranged in the spring-brake line (51) between the output branching-off point (81) of the output line (80) and the first branching-off point (41a) of the control line (41).

2. A parking brake device (1; 1') according to claim 1,
**characterised in that**
the spring-brake line (51) forms a feedback connection to the relay valve (40) via the restrictor unit (52) and the spring-brake valve (50).

3. A parking brake device (1; 1') according to claim 1 or 2,
**characterised in that**
the spring-brake valve (50) is provided in the form of a deenergised-when-open solenoid valve such that when the spring-brake valve (50) is deenergised feedback occurs between a control input (40c) and an output (40b) of the relay valve (40) via the control line (41), the spring-brake line (51) and the output line (80) with the spring-brake valve (50) and the restrictor unit (52) .

4. A parking brake device (1; 1') according to any of the preceding claims, **characterised in that**
a control valve (30) is arranged between the first branching-off point (41a) and the second branching-off point (41b) of the control line (41).

5. A parking brake device (1; 1') according to any of the preceding claims,
**characterised in that**
an inlet valve (21) of the inlet bleed solenoid valve unit (20) is provided in the form of a deenergised-when-open solenoid valve, and the control valve (30) is provided in the form of a deenergised-when-closed solenoid valve.

6. A parking brake device (1; 1') according to any one of claims 1 to 4,
**characterised in that**
the inlet valve (21) of the inlet bleed solenoid valve unit (20) is provided as a deenergised-when-closed solenoid valve, and the control valve (30) is provided as a deenergised-when-open solenoid valve.

7. A parking brake device (1; 1') according to any of the preceding claims,
**characterised in that**
the parking brake device (1; 1') has a trailer valve unit (60; 60') that is connected to the inlet bleed solenoid valve unit (20) via the trailer valve line (61), the second branching-off point (41b) and the control line (41).

8. A parking brake device (1) according to any of the preceding claims,
**characterised in that**
the trailer valve unit is a trailer control valve (60) that is connected to the spring-brake line (51), and via the spring-brake line (51) to the spring-brake valve (50) and the relay valve (40).

9. A parking brake device (1') according to any one of claims 1 to 7,
**characterised in that**
the trailer valve unit takes the form of a trailer control module (60') that is integrated in the parking brake device (1').

10. A parking brake device (1; 1') according to any of the preceding claims,
**characterised in that**
the inlet bleed solenoid valve unit (20) is configured such that at least one inlet valve (21) is provided between the compressed-air port (10) and the control line (41) and that a bleed valve (22) is provided between the control line (41) and a bleed output (23).

## Revendications

1. Dispositif (1 ; 1') de frein de stationnement de véhicule automobile comprenant au moins un raccord (10) pour de l'air comprimé, un groupe (20) d'électrovanne d'admission - mise à l'atmosphère, une vanne (40) relais et au moins une première sortie (71 ; 72) d'air comprimé,
dans lequel le raccord (10) pour de l'air comprimé communique avec le groupe (20) d'électrovanne d'admission - mise à l'atmosphère et avec la vanne (40) relais,
dans lequel il est prévu un conduit (41) de commande, tel que la vanne (40) relais communique ou puisse communiquer avec le groupe (20) d'électrovanne d'admission - mise à l'atmosphère,
dans lequel le conduit (41) de commande a, en amont de la vanne (40) relais, une première bifurcation (41a) et une deuxième bifurcation (41b),
dans lequel il est prévu un conduit (80) de sortie, qui communique avec la au moins une première sortie (71 ; 72) d'air comprimé et qui a une bifurcation (81) de sortie,
**caractérisé en ce que**
il est prévu un conduit (51) de frein à ressort, qui communique, par la première bifurcation (41a), avec le conduit (41) de commande et, par la bifurcation (81) de sortie, avec le conduit (80) de sortie, et il est prévu un conduit (61) de soupape de remorque, qui communique avec le conduit (41) de commande par la deuxième bifurcation (41b),
dans lequel le dispositif (1 ; 1') de frein de stationnement a une soupape (50) de frein à ressort, qui est montée dans le conduit (51) de frein à ressort et qui communique avec la vanne (40) relais, et une unité (52) d'étranglement, qui est montée dans le conduit (51) de frein à ressort entre la bifurcation (81) de sortie du conduit (80) de sortie et la première bifurcation (41a) du conduit (41) de commande.

2. Dispositif (1 ; 1') de frein de stationnement suivant la revendication 1,
**caractérisé en ce que**
le conduit (51) de frein à ressort donne, par l'unité (52) d'étranglement et la soupape (50) de frein à ressort, un effet de retour à la vanne (40) relais.

3. Dispositif (1 ; 1') de frein de stationnement suivant la revendication 1 ou 2,
**caractérisé en ce que**
la soupape (50) de frein à ressort est prévue sous la forme d'une électrovanne ouverte sans courant, de manière à avoir avec la soupape (50) de frein à ressort et l'unité (52) d'étranglement, dans l'état sans courant de la soupape (50) de frein à ressort, entre une entrée (40c) de commande et une sortie (40b) de la vanne (40) relais, un effet de retour par le conduit (41) de commande, le conduit (51) de frein à ressort et le conduit (80) de sortie.

4. Dispositif (1 ; 1') de frein de stationnement suivant l'une des revendications précédentes,
**caractérisé en ce que**
une soupape (30) de commande est montée entre la première bifurcation (41a) et la deuxième bifurcation (41b) du conduit (41) de commande.

5. Dispositif (1 ; 1') de frein de stationnement suivant l'une des revendications précédentes,
**caractérisé en ce que**
une vanne (21) d'admission du groupe (20) d'électrovanne d'admission - mise à l'atmosphère est prévue sous la forme d'une électrovanne ouverte sans courant, et la soupape (30) de commande est prévue sous la forme d'un électrovanne fermée sans courant.

6. Dispositif (1 ; 1') de frein de stationnement suivant l'une des revendications 1 à 4,
**caractérisé en ce que**
la soupape (21) d'admission du groupe (20) d'électrovanne d'admission - mise à l'atmosphère est prévue sous la forme d'une électrovanne fermée sans courant, et la soupape (30) de commande est prévue sous la forme d'une électrovanne ouverte sans courant.

7. Dispositif (1 ; 1') de frein de stationnement suivant l'une des revendications précédentes,
**caractérisé en ce que**
le dispositif (1 ; 1') de frein de stationnement a un groupe (60 ; 60') de soupape de remorque qui, par le conduit (61) de soupape de remorque, la deuxième bifurcation (41b) et le conduit (41) de commande, communique avec le groupe (20) d'électrovanne d'admission - mise à l'atmosphère.

8. Dispositif (1) de frein de stationnement suivant l'une des revendications précédentes,
**caractérisé en ce que**
le groupe de soupape de remorque est une soupape (60) de commande de remorque, qui communique avec le conduit (51) de frein à ressort et, par le conduit (51) de frein à ressort, avec la soupape (50) de frein à ressort et la vanne (40) relais.

9. Dispositif (1') de frein de stationnement suivant l'une des revendications 1 à 7,
**caractérisé en ce que**
le groupe de soupape de remorque est constitué sous la forme d'un module (60') de commande de remorque intégré au dispositif (1') de frein de stationnement

10. Dispositif (1 ; 1') de frein de stationnement suivant l'une des revendications précédentes,
**caractérisé en ce que**
le groupe (20) d'électrovanne d'admission - mise à l'atmosphère est conformé, de manière à prévoir, entre le raccord (10) pour de l'air comprimé et le conduit (41) de commande, au moins une soupape (21) d'admission et, entre le conduit (41) de commande et une sortie (23) de mise à l'atmosphère, une soupape (22) de mise à l'atmosphère.
